# EUROPÄISCHE PATENTSCHRIFT

(11) **EP 2 383 217 B1**
(45) Veröffentlichungstag und Bekanntmachung des Hinweises auf die Patenterteilung: **14.05.2014**
(21) Anmeldenummer: 11162693.3
(22) Anmeldetag: 15.04.2011
(51) Int. Cl.: B66C 13/40, B66C 13/48, G01S 11/06, G08C 23/00, G08C 23/04, G01S 11/16, G08C 17/02

(54) **Verfahren zum Heranholen eines Krans**
Method for fetching a crane
Procédé de rapprochement d'une grue

(30) Priorität: 29.04.2010 DE 102010028395
(43) Veröffentlichungstag der Anmeldung: 02.11.2011
(73) Patentinhaber: Demag Cranes & Components GmbH, 58300 Wetter (DE)
(72) Erfinder: Bönker, Thomas, 59425 Unna (DE); Elspass, Stefan, 47918 Tönisvorst (DE); Hermans, Wim, 3051 HE Rotterdam (NL)
(74) Vertreter: Moser & Götze

(56) Entgegenhaltungen:
- DE-A1- 4 204 658
- JP-A- 8 143 274
- JP-A- 2005 257 606

## Beschreibung

Die Erfindung betrifft ein Verfahren für entlang eines ortsfesten Fahrwegs verfahrbare Krane mit dem der Bediener einen Kran auf Tastendruck zu sich heranholen kann.

Solche Krane bewegen sich üblicherweise auf festverlegten Schienen in Hallen oder freien Werksbereichen. Sehr häufig werden diese elektrischen Krane nur sporadisch genutzt, wobei wechselnde Lasten von verschiedenen Positionen aufgenommen werden. Dazu ist der Bedienablauf meist derart, dass der Bediener zunächst den Kran 'heranholt', d.h. z.B. den Kran mittels Verfahren der Laufkatze über die Funktionen 'Kranfahrt' und 'Katzfahrt' über die zu bewegende Last platziert, also heranholt bzw. den Abstand minimiert.

Da dieser Vorgang üblicherweise bei wechselnden Positionen der zu bewegenden Lasten sehr häufig wiederholt wird und bei Kranen mit großer Spannweite bzw. großen Kranbahnlängen viel Zeit in Anspruch nehmen kann, erscheint es sinnvoll, diesen Vorgang zu vereinfachen und zu automatisieren.

Gedanklich muss dazu die Position des Bedieners über das Bedienhandteil (oder Fernsteuerung) relativ zu der momentanen Position des Krans bestimmt werden. Anschließend kann eine geeignete Steuerung des Krans erfolgen, um einen ggf. notwendigen Positionswechsel automatisch auf Knopfdruck vorzunehmen.

Aus der DE 42 04 658 A1 ist eine Fernbedienung für Fördergeräte, insbesondere Flurfördergeräte wie Lauf-Krane mit einem Handsteuergerät, gemäß dem Oberbegriff des Anspruchs 1, bekannt, in dem ein Sender für elektromagnetische Wellen enthalten ist, und einer im Lauf-Kran vorgesehenen Empfängereinheit, in der ein Sensor für diese elektromagnetischen Wellen enthalten ist, wobei das Handsteuergerät weiter mit einem Ultraschallsender versehen ist und die Empfangseinheit mit einem Ultraschallsensor und Rechenmitteln zur Ermittlung der Laufzeitdifferenzen zwischen einem Infrarotsignal und einem Ultraschallsignal versehen ist.

Mit diesem System soll es möglich sein, das entsprechende Fördergerät an den Ort innerhalb einer Werkhalle "zu rufen", an dem es als nächstes benötigt wird.

Dazu umfasst die Fernbedienung zwei Sender, nämlich ein Infrarot- und ein Ultraschallsender, um gleichzeitig nach Betätigung eines Schalters ein Signal auszusenden, das mittels entsprechender Empfänger an dem Fördergerät empfangen und anschließend im Fördergerät in einem Rechner ausgewertet wird. Dabei wird die Laufzeitdifferenz zwischen den zwei Signalen ermittelt und zur Entfernungsberechnung (vgl. Spalte 2, Zeilen 23 - 32) verwendet.

Dieses System hat aber insbesondere in räumliche schwierigen Situationen Probleme genaue Ergebnisse zu liefen, da insbesondere die verwendeten Ultraschallwellen zu mehrfachen Reflektionen etc. neigen und somit die Laufzeiten differieren und mehrere Signale sich am Empfänger überlagern. Auch ist es technisch aufwendig, in der Fernbedienung gleichzeitig zwei Sender vorzusehen. Auch geht mit solchen "time of flight" Methoden die Notwendigkeit genauer Uhren bzw. deren Abgleich einher.

Aus der JP 08 143 274 ist ein Verfahren bekannt, wobei Signalintensitäten verwendet werden, zur Bestimmung der absoluten Koordinaten des Handsteuergeräts bzw. Krans.

Demgegenüber besteht die Aufgabe der vorliegenden Erfindung daher darin, ein Verfahren für Krane bereitzustellen, mit dem der Bediener den Kran auf Tastendruck zu sich heranholen kann und das technisch einfach zu realisieren ist und trotzdem zuverlässige Ergebnisse liefert.

Diese Aufgabe wird durch das in Anspruch 1 wiedergegebene Verfahren gelöst.

Wie der Stand der Technik umfasst das Verfahren für entlang eines ortsfesten Fahrwegs verfahrbare Krane mit dem der Bediener einen Kran auf Tastendruck zu sich heranholen kann die Schritte Aussenden von elektromagnetischen Wellen zwischen einem drahtlosen, dem Kran zugewiesenen Handsteuergerät für die Kransteuerung und dem Kran und Empfang der elektromagnetischen Wellen mittels einer Empfängereinheit.

Im Unterschied zum Stand der Technik wird jedoch nicht ein Signallaufzeitverfahren verwendet, sondern ein Verfahren, das auf der Signalstärke basiert. Das erfindungsgemäße Verfahren umfasst die weiteren Schritte
- Bestimmung der Signalstärke der ausgesandten und von der Empfängereinheit empfangenen Signale;
- Bestimmung des relativen Abstands des Handsteuergeräts vom Kran über die Signalstärken der empfangenen Signale und
- Minimierung des Abstands des Krans zum Handsteuergerät durch Verfahren des Krans entlang seines ortsfesten Fahrwegs.

Diese Funktion des Krans wird auch als "Follow-me" Funktion bezeichnet, da der Kran quasi dem Bediener folgt. Es wird also der Abstand des Lastaufnahmemittels des Krans, in seiner Sicherheitsstellung, zum Bediener minimiert.

Die Verwendung der Signalstärke, z.B. in Form eines RSSI (Received Signal Strength Indication) Signals, hat den Vorteil, das moderne Transceiver, die üblicherweise zum Einsatz kommen, bereits über die Fähigkeit verfügen, die Signalstärke zu bestimmen. Somit ist die Umsetzung des Verfahrens einfach und die entsprechenden Geräte und System können kostengünstig und schnell aufgebaut sowie angepasst werden.

Die Received Signal Strength Indication (RSSI) stellt einen Indikator für die Empfangsfeldstärke kabelloser Kommunikationsanwendungen dar. Der RSSI Indikator wird z.B. von Mobiltelefonen und anderen auf Funkkommunikation angewiesenen Systemen benötigt, um einen für die Kommunikation brauchbaren Kanal zu finden. Falls die Signalstärke, die für eine erfolgreiche Kommunikation benötigt wird, auf dem aktuell genutzten Kanal unterschritten wird, kann mit Hilfe des RSSI-Wertes gegebenenfalls auf einen besseren (stärkeren) Kanal gewechselt werden.

Vorliegend wird das Signalstärkesignal aber auf ganz anderem Wege verwendet, nämlich als Indikator für den relativen Abstand. Dabei wird angenommen, dass bei minimalem Abstand die Signalstärke ein Maximum erreicht.

Das Verfahren kann halb-automatisch oder (voll)-automatisch durchgeführt werden, so dass die Minimierung der Entfernung durch das Heranholen halb-automatisch nach Betätigung eines Schalters im Handsteuergerät erfolgt oder die Minimierung der Entfernung durch das Heranholen automatisch nach Betätigung eines Schalters im Handsteuergerät erfolgt.

Im ersten Fall wird der Kran nur solange verfahren, wie der Schalter betätigt wird. Dies hat den Vorteil einer "Totmann"-Funktion, die aus Gründen der Arbeitssicherheit gewünscht sein kann. Im zweiten Fall wird der Schalter nur einmal betätigt und der Kran solange automatisch verfahren, bis die gewünschte Position mit minimalem Abstand erreicht ist.

Die Betätigung des Schalters im Handsteuergerät löst also vorzugsweise in beiden Fällen ein Aussenden eines Heranholsignals und dessen Empfang in der Empfängereinheit und somit die Minimierung des Abstands des Krans zum Bediener aus. Das Signal kann dann entweder selber für die Signalstärkeauswertung herangezogen werden oder es kann ein gesondertes explizites Signal dazu verwendet werden.

Um die korrekte Richtung für das Verfahren bzw. Heranholen des Krans zu bestimmen, kann im einfachsten Falle vorgesehen sein, dass der Kran eine zufällige Bewegung ausführt, während dessen die Signalstärke überwacht wird, so dass das Verfahren des Krans zur Minimierung der Entfernung zum Handsteuergerät in die Richtung mit ansteigender Signalstärke ausgelöst werden kann. Alternativ könnten mehrere beabstandete Empfängereinheiten vorgesehen sein, so dass die Auswertung deren Signalstärkeergebnisse die Bestimmung eines Richtungsvektors zuließe.

Anschließend ist es bevorzugt, dass die Signalstärke auch während des Verfahrens des Krans überwacht wird, so dass der Kran bei Erreichen eines Maximums der Signalstärke angehalten wird. Dann ist nämlich nach dem Erfindungsgedanken der minimale Abstand erreicht.

Da auch die Signale der Signalstärken je nach Umgebung stark und schnell schwanken können, ist es sinnvoll, wenn die Signalstärke vor ihrer Auswertung gefiltert wird, um schnellste Schwankungen auszuschließen und einen echten Trend des Signals bzw. der Signalstärke zu erkennen.

In einer einfachen Ausgestaltung des Verfahrens sind der Sender im Handsteuergerät und die Empfängereinheit am Kran sowie eine Steuerung für die Auswertung der Signalstärken am Kran angeordnet. Es wird also die Signalstärke der von dem Handsteuergerät ausgesandten Signale am Kran bestimmt und weiter verwendet, in dem daraufhin die Steuerung eine Bewegung des Krans bewirkt. Dies kann z.B. über einen Zweiachsenpositioniercontroller erfolgen, der entweder Teil der Steuerung oder Teil einer (ggf. übergeordneten) separaten (zweiten) Steuerung sein kann.

Eine weitere Erhöhung der Genauigkeit und Zuverlässigkeit kann erhalten werden, wenn entweder mehrere Empfängereinheiten verwendet werden und/oder das vorliegende Signalstärkeverfahren mit einem Signallaufzeitverfahren kombiniert wird.

Weitere Einzelheiten, Merkmale und Vorteile der Erfindung ergeben sich aus der nachfolgenden Beschreibung eines Ausführungsbeispiels anhand der Zeichnung, in der
Fig. 1 eine schematische Ansicht eines mit einer "Follow-me"-Funktion ausgerüsteten Hallenkrans beim Heranholen gezeigt ist und
Fig. 2 eine schematischer Ablauf der in Figur 1 durchgeführten Schritte im Rahmen des Verfahrens zum Heranholen des Krans.

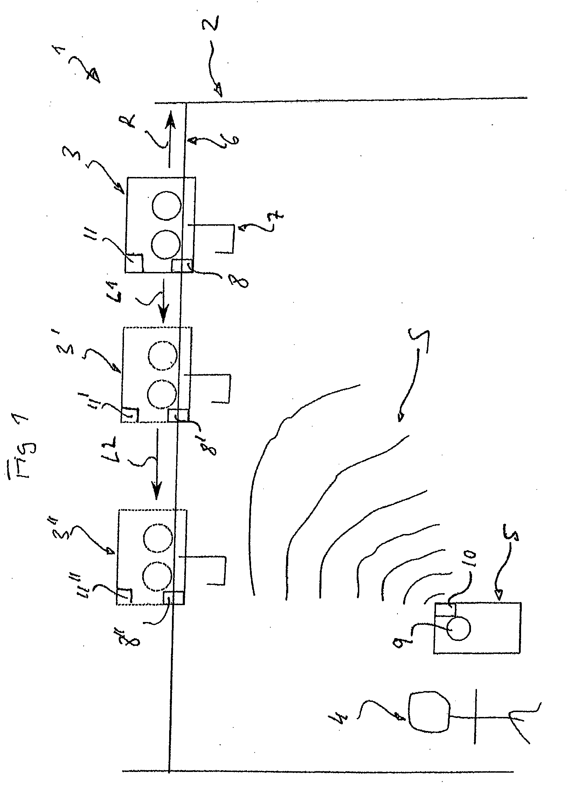

In der Figur 1 ist ein als Ganzes mit 1 bezeichneter Hallenkran dargestellt. Der Hallenkran 1 besteht aus einem Kranträger 6, der auf einer unter einem Hallendach vorhandenen Kranbahn 2 verfahren werden kann. Auf diesem Kranträger 6 sind ein oder mehrere verfahrbare Laufkatzen 3 angeordnet. Im vorliegenden Beispiel ist lediglich eine Laufkatze 3 gezeigt.

Auf dieser Laufkatze 3 ist ein Hubwerk (nicht dargestellt) zum Heben und Senken der Lasten vorgesehen. Vorliegend ist lediglich der Lasthaken 7 des Hubwerks für die Befestigung der Last angedeutet.

Alle drei Bewegungsrichtungen, also die Bewegung des Kranträgers 6, Laufkatze 3 sowie des Hubwerks, werden vom Bediener 4 mittels eines drahtlosen Handbediengeräts 5 gesteuert, das ein Verfahren der Laufkatze 3 entlang des Kranträgers 6 und die Bewegung des Kranträgers 6 entlang der sich in Blickrichtung erstreckenden Kranbahn 2erlaubt sowie ein Senken und Heben des Lasthakens 7 über das in der Laufkatze 3 integrierte (nicht dargestellte) Hubwerk.

Die Laufkatze 3 ist mit einem Empfänger 8 ausgestattet, der an ihrer Unterseite angeordnet ist, um Signale von dem Handbediengerät 5 zu empfangen. Zusätzlich umfasst die Laufkatze 3 eine Steuerung 11 für die Auswertung der Signalstärken.

Das Handbediengerät 5 ist mit einer entsprechenden Sendeeinheit 10 ausgestattet ist, um bei Betätigung eines Schalters 9 das Heranholen durch Aussenden eines entsprechenden Signals S auszulösen.

Die "follow-me"-Funktion kann aus Sicherheitsgründen nur dann gestartet werden, wenn sich der Lasthaken 7 in einer sicheren Position befindet (Auswertung eines Relais-Kontaktes "höchste Hakenstellung").

Die Betätigung des Schalters 9 im Handbediengerät 5 löst also ein Aussenden des Heranholsignals S und dessen Empfang in der Empfängereinheit 8 und somit die Minimierung des Abstands des eigentlichen Krans, nämlich der Laufkatze 3, durch Verfahren der Laufkatze 3 sowie des Kranträgers 6 zum Bediener 4 aus.

Das Signal S kann dann entweder selber für die Signalstärkeauswertung herangezogen werden oder es kann ein gesondertes explizites Signal dazu verwendet werden.

Das Signal S wird also solange ausgestrahlt, bis das Heranholen beendet ist. Alternativ könnte das Signal, z.B. um Energie zu sparen, periodisch ausgestrahlt werden.

Im vorliegenden Beispiel führt die Laufkatze 3 (ganz rechts) eine zufällige Bewegung aus (nach rechts, in Richtung des Pfeils R). Daraufhin wird von der Steuerung 11 ermittelt, dass die Signalstärke des Signals S abnimmt, der Abstand sich also vergrößert.

Die Laufkatze 3 wird dann in die andere Richtung (nach links, in Richtung des Pfeils L1) verfahren, entsprechend der gestrichelten Ausführungen 3'.

Daraufhin wird von der Steuerung 11 ermittelt, dass die Signalstärke des Signals S zu nimmt, der Abstand sich also verringert. Die Laufkatze 3 bzw. 3' wird also weiter in dieselbe Richtung nach links verfahren.

Die Laufkatze 3 wird daher weiter in die andere Richtung (nach links, in Richtung des Pfeils L2) verfahren, entsprechend der gestrichelten Ausführungen 3".

Daraufhin wird von der Steuerung 11 ermittelt, dass die Signalstärke des Signals S ein Maximum erreicht hat, der Abstand sich also minimiert hat. Die Laufkatze 3 wird angehalten.

Es versteht sich, dass die Laufkatze 3 ggf. zur Bestimmung des minimalen Abstands "zu weit" verfahren werden muss, um das Maximum der Signalstärke des Signals S zu bestimmen. Anschließend kann die Laufkatze 3 aber gegebenenfalls um die Different "zurück gefahren" werden.

Es versteht sich auch, dass die Laufkatze 3 ggf. über den Kranträger 6 ebenfalls verfahrbar ist, nämlich in Blickrichtung der Figur 1, um den Abstand zum Bediener 4 zu minimieren, falls notwendig.

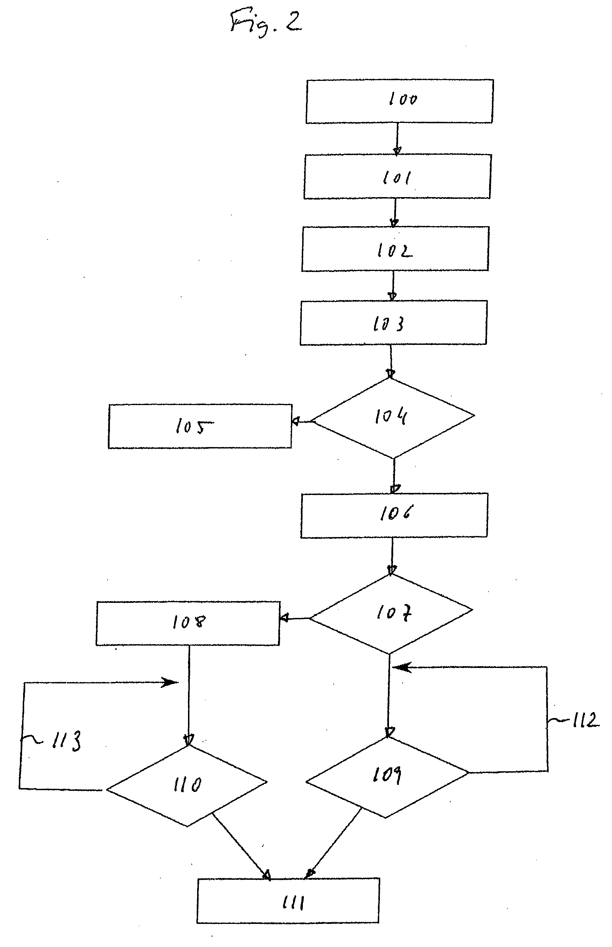

Nachfolgend wird der Ablauf des Verfahrens anhand des Ablaufschemas in Figur 2 näher erläutert.

Der Bediener 4 betätigt die Heranholtaste 9 (Schritt 100), was ein Aussenden des Signals S von der Sendeeinheit 10 des Handbediengeräts 5 auslöst (Schritt 101).

Dieses Signal S wird vom Empfänger 8 in der Laufkatze 3 empfangen (Schritt 102) und löst in der Steuerung den "Follow-me" Modus (Schritt 103) aus.

Im anschließenden Schritt 104 wird daraufhin aus Sicherheitsgründen durch Auswertung eines Relais-Kontaktes geprüft, ob sich der Lasthaken 7 in einer sicheren Position, der höchsten Hakenstellung befindet.

Wird dies verneint, wird der "Follow-me" Modus beendet (Schritt 105) bzw. das Heranholen nicht ausgeführt und ggf. ein optisches und/oder akustisches Fehlersignal ausgegeben.

Sollte sich der Lasthaken 7 in der geforderten sichern Position befinden, führt die Laufkatze 3 und ggf. der Kranträger 6 eine zufällige Bewegung aus (Schritt 106).

Je nach Ausgestaltung kann dies eine zweidimensionale Bewegung, also eine Bewegung der Laufkatze 3 auf dem Kranträger 6 und eine Bewegung des Kranträgers 6 in der Halle sein. Vorliegend wird der Einfachheit halber von einer eindimensionalen Bewegung ausgegangen (Richtung R).

Während dieser zufälligen Bewegung wird das Signal S bzw. dessen Signalstärke durch die Steuerung 11 überwacht (Schritt 107).

Wenn die Signalstärke des Signals S bei der zufälligen Bewegung zunimmt, wird die eingeschlagene Richtung beibehalten.

Wenn die Signalstärke des Signals S bei der zufälligen Bewegung abnimmt, wie im vorliegenden Beispiel, wird die eingeschlagene Richtung geändert (Schritt 108).

Es versteht sich, dass diese Schritte zur Bestimmung der Richtung ansteigender Signalstärke und somit der anfänglichen Bewegungsrichtung mehrstufig und wiederholend durchlaufen werden können, insbesondere wenn es sich um eine zweidimensionale zufällige Bewegung handelt.

Anschließend wird die Laufkatze 3 also in die jeweilig ausgewählte Richtung (Richtung L) weiter verfahren und jeweils im Schritt 109 bzw. 110 geprüft, ob die Signalstärke des Signals S ein Maximum erreicht hat.

Liegt kein Maximum vor, wird jeweils Schleife 112 bzw. 113 durchlaufen, um die Laufkatze 3 in die jeweilig ausgewählte Richtung weiter zu verfahren und jeweils erneut/wiederkehrend im Schritt 109 bzw. 110 zu prüfen, ob die Signalstärke des Signals S ein Maximum erreicht hat.

Ist das Maximum der Signalstärke erreicht, wird die Laufkatze 3 angehalten und das Heranholen ist beendet (Schritt 111).

### Bezugszeichenliste

- 1: Hallenkran
- 2: Kranbahn
- 3: Laufkatze
- 4: Bediener
- 5: Handbediengerät
- 6: Kranträger
- 7: Lasthaken
- 8: Empfänger
- 9: Taste
- 10: Sendeeinheit
- 11: Steuerung
- L1, L2: linke Richtung
- R: rechte Richtung
- S: Signal

## Patentansprüche

1. Verfahren für entlang eines ortsfesten Fahrwegs (2) verfahrbare Krane (1, 3, 6) mit dem der Bediener (4) einen Kran (1, 3, 6) auf Tastendruck (9) zu sich heranholen kann, umfassend die Schritte:
- Aussenden von elektromagnetischen Wellen (S) zwischen einem drahtlosen, dem Kran (1) zugewiesenen Handsteuergerät (5) für die Kransteuerung und dem Kran (1);
- Empfang der elektromagnetischen Wellen (S) mittels einer Empfängereinheit (8);
**gekennzeichnet durch** die weiteren Schritte
- Bestimmung der Signalstärke der ausgesandten und von der Empfängereinheit (8) empfangenen Signale (S);
- Bestimmung des relativen Abstands des Handsteuergeräts (5) vom Kran über die Signalstärken der empfangenen Signale (S) und
- Minimierung des Abstands des Krans (1) zum Handsteuergerät (5) **durch** Verfahren des Krans (1, 3, 6) entlang seines ortsfesten Fahrwegs (2).

2. Verfahren nach Anspruch 1, **dadurch gekennzeichnet, dass** die Minimierung der Entfernung durch das Heranholen halb-automatisch nach Betätigung eines Schalters (9) im Handsteuergerät (5) erfolgt.

3. Verfahren nach Anspruch 1, **dadurch gekennzeichnet, dass** die Minimierung der Entfernung durch das Heranholen automatisch nach Betätigung eines Schalters (9) im Handsteuergerät (5) erfolgt.

4. Verfahren nach Anspruch 2 oder 3, **dadurch gekennzeichnet, dass** die Betätigung des Schalters (9) im Handsteuergerät (5) ein Aussenden eines Heranholsignals (S) und dessen Empfang in der Empfängereinheit (8) die Minimierung auslöst.

5. Verfahren nach einem der vorhergehenden Ansprüche, **dadurch gekennzeichnet, dass** der Kran (1) eine zufällige Bewegung ausführt, während dessen die Signalstärke überwacht wird, so dass das Verfahren des Krans zur Minimierung der Entfernung zum Handsteuergerät (5) in die Richtung mit ansteigender Signalstärke ausgelöst werden kann.

6. Verfahren nach einem der vorhergehenden Ansprüche, **dadurch gekennzeichnet, dass** die Signalstärke während des Verfahrens des Krans (1) überwacht und der Kran (1) bei Erreichen eines Maximums der Signalstärke angehalten wird.

7. Verfahren nach einem der vorhergehenden Ansprüche, **dadurch gekennzeichnet, dass** die Signalstärke vor ihrer Auswertung gefiltert wird.

8. Verfahren nach einem der vorhergehenden Ansprüche, **dadurch gekennzeichnet, dass** der Sender (10) im Handsteuergerät (5) und die Empfängereinheit (8) am Kran (1) sowie eine Steuerung (11) für die Auswertung der Signalstärken am Kran (1) angeordnet sind.

9. Verfahren nach einem der vorhergehenden Ansprüche, **dadurch gekennzeichnet, dass** das Signalstärkeverfahren mit einem Signallaufzeitverfahren kombiniert wird.

## Claims

1. Method for cranes (1, 3, 6) displaceable along a fixed path of travel (2) by which the operator (4) can summon a crane (1, 3, 6) to himself by press-button action (9), comprising the following steps:
- emission of electromagnetic waves (S) between a wireless manual control unit (5) for crane control which is assigned to the crane (1) and the crane (1),
- reception of the electromagnetic waves (S) by means of a receiver unit (8),
**characterised by** the following further steps
- determination of the strength of the signals (S) which are emitted and which are received by the receiver unit (8),
- determination of the relative distance of the manual control unit (5) from the crane via the strengths of the received signals (S), and
- minimising of the distance from the crane (1) to the manual control unit (5) by displacement of the crane (1, 3, 6) along its fixed path of travel (2).

2. Method according to claim 1, **characterised in that** the minimising of the distance by the summoning takes place semi-automatically following actuation of a switch (9) on the manual control unit (5).

3. Method according to claim 1, **characterised in that** the minimising of the distance by the summoning takes place automatically following actuation of a switch (9) on the manual control unit (5).

4. Method according to claim 2 or 3, **characterised in that** the actuation of the switch (9) on the manual control unit (5) triggers the emission of a summoning signal (S) and the reception of the latter at the receiver unit (8) triggers the minimising.

5. Method according to one of the preceding claims, **characterised in that** the crane (1) performs a random movement during which the signal strength is monitored, it thus being possible for the displacement of the crane (1) to minimise its distance from the manual control unit (5) to be triggered in the direction in which the signal strength increases.

6. Method according to one of the preceding claims, **characterised in that** the signal strength is monitored during the displacement of the crane (1) and the crane (1) is stopped when the signal strength reaches a maximum.

7. Method according to one of the preceding claims, **characterised in that** the signal strength is filtered prior to its analysis.

8. Method according to one of the preceding claims, **characterised in that** the emitter (10) is arranged in the manual control unit (5) and the receiver unit (8) on the crane (1) and a control system (11) for analysing the signal strengths is arranged on the crane (1).

9. Method according to one of the preceding claims, **characterised in that** the signal strength method is combined with a signal transit time method.

## Revendications

1. Procédé qui est destiné à des grues (1, 3, 6) déplaçables le long d'une voie de roulement fixe (2) et au moyen duquel l'opérateur (4) peut rapprocher de lui une grue (1, 3, 6) par pression sur des touches (9), ledit procédé comprenant les étapes consistant à :
- émettre des ondes électromagnétiques (S) entre la grue (1) et un dispositif de commande à main (5) sans fil associé à la grue (1) et destiné à commander la grue (1) et ;
- recevoir les ondes électromagnétiques (S) au moyen d'une unité de réception (8) ;
**caractérisé par** les autres étapes consistant à
- déterminer l'intensité des signaux (S) émis et reçus par l'unité de réception (8) ;
- déterminer de la distance relative du dispositif de commande à main (5) à la grue grâce à l'intensité des signaux (S) reçus et
- minimiser la distance de la grue (1) à l'unité de commande à main (5) par déplacement de la grue (1, 3, 6) le long de son chemin de roulement fixe (2).

2. Procédé selon la revendication 1, **caractérisé en ce que** la minimisation de la distance par rapprochement se fait de façon semi-automatique après actionnement d'un commutateur (9) situé dans l'unité de commande à main (5).

3. Procédé selon la revendication 1, **caractérisé en ce que** la minimisation de la distance par rapprochement se fait de façon automatique après actionnement d'un commutateur (9) situé dans l'unité de commande à main (5).

4. Procédé selon la revendication 2 ou 3, **caractérisé en ce que** l'actionnement du commutateur (9) situé dans l'unité de commande à main (5) déclenche l'émission d'un signal de rapprochement (S) et la réception de celui-ci par l'unité de réception (8) déclenche la minimisation.

5. Procédé selon l'une des revendications précédentes, **caractérisé en ce que** la grue (1) effectue un mouvement aléatoire au cours duquel l'intensité des signaux est surveillé de manière à pouvoir déclencher le déplacement de la grue dans le sens de l'augmentation de l'intensité des signaux afin de minimiser la distance à l'unité de commande à main (5).

6. Procédé selon l'une des revendications précédentes, **caractérisé en ce que** l'intensité des signaux est surveillée au cours du déplacement de la grue (1) et la grue (1) est arrêtée après qu'une intensité maximale des signaux a été atteinte.

7. Procédé selon l'une des revendications précédentes, **caractérisé en ce que** l'intensité des signaux est filtrée avant son évaluation.

8. Procédé selon l'une des revendications précédentes, **caractérisé en ce que** l'émetteur (10) est disposé dans l'unité de commande à main (5) et l'unité de réception (8) est disposée au niveau de la grue (1) et un dispositif de commande (11) est disposé au niveau de la grue (1) pour évaluer l'intensité des signaux.

9. Procédé selon l'une des revendications précédentes, **caractérisé en ce que** le procédé utilisant l'intensité des signaux est combiné à un procédé utilisant le temps de propagation des signaux.
